# NEW EUROPEAN PATENT SPECIFICATION

(11) **EP 1 291 588 B2**
(45) Date of publication and mention of the opposition decision: **03.04.2013**
(45) Mention of the grant of the patent: 02.11.2005
(21) Application number: 02079621.5
(22) Date of filing: 04.02.1999
(51) Int. Cl.: F24F 6/02, A01G 9/24, C02F 1/44, B01D 61/36

(54) **Use of an apparatus for augmenting humidity**
Verwendung einer Vorrichtung zur Erhöhung der Feuchtigkeit
Utilisation d'un dispositif pour augmenter l'humidité

(30) Priority: 05.02.1998 US 19287
(43) Date of publication of application: 12.03.2003
(62) Divisional of application: 99905665.8
(73) Proprietor: Design Technology and Innovation Limited, Croydon Surrey CR0 0YN (GB)
(72) Inventor: Tonkin, Mark Christopher, Ripe Village Lewes Sussex BN8 6AP (GB); Young, Mark Andrew, Hemel Hemstead Hertfordshire HP1 1SZ (GB); Kirchner, Olaf Norbert, Wilmington, DE 19807 (US)
(74) Representative: Kirsch, Susan Edith

(56) References cited:
- EP-A- 0 521 726
- EP-A- 0 808 657
- GB-A- 1 541 283
- US-A- 3 361 645
- US-A- 4 725 481
- US-A- 5 348 691
- US-A- 5 595 662
- KORNGOLD ET AL: "Water desalination by pervaporation with hollow fiber membranes" DESALINATION, vol. 107, no. 2, 1 October 1996 (1996-10-01), page 121-129 XP004071159
- BRÜSCHKE H.: 'Industrial application of membrane separation processes' PURE & APPL. CHEM. vol. 67, no. 6, 1995, pages 993 - 1002
- RILEY R.L. ET AL: 'Spiral-wound thin-film composite membrane systems for brackish and seawater desalination by reverse osmosis' DESALINATION vol. 23, no. 1-2-3, 1977, pages 331 - 355
- BAKISH R. A.: 'Proc. Int. Conf, Pervaporation Processes Chem. Ind.', 1991 deel DETTWILER B. ET AL: 'Bioproduction of acetoin and butanediol; product recovery by pervaporation', pages 308 - 318

## Description

### BACKGROUND

### 1. Field of the Invention

This invention relates to the use of a humidity augmenting apparatus for providing moisture to an airspace of an enclosed chamber.

### 2. Description of the Related Art

There are known processes for purifying water, and the type of process used depends on the nature and amount of the impurities in the water. For example, impurities in particulate form and in solution may both need to be removed from the water. The aim is to purify the water so that it contains sufficiently low amounts of suspended particles, suspended microbes and dissolved salts to meet the quality requirements of water for drinking, for the production of food and drink, for agricultural irrigation and for industrial use.

Processes for the purification of water are usually classified as filtration, distillation or reverse osmosis. In conventional particle filtration processes, impurities in particulate form, such as suspended inorganic particles, are removed using porous constructions such as woven or non-woven fabrics. In cases where very small particles must be filtered, polymer membranes are used which are microporous, that is, the membranes have very small holes through which the particulates to be filtered cannot pass.

Aqueous solutions containing dissolved salts are usually purified by reverse osmosis or distillation. When the aqueous solution is in the form of seawater or brackish water, these processes are generally known as desalination. The process of reverse osmosis relies on applying pressure to solutions of ions across a semipermeable membrane. If the applied pressure is greater than the osmotic pressure of the solution, purified water is collected from the side of the membrane not in contact with the solution. Reverse osmosis membranes let water pass through them but reject the passage of salt ions. In reality a small percentage, say 1%, of sea salts pass through the membranes. US Patent No. 5,547,586 discloses a method to desalinate seawater and brackish water utilizing an enzyme-assisted membrane. As opposed to reverse osmosis, distillation methods using seawater or brackish water can yield water with a very low amount of suspended particles and dissolved solids. However, the high latent heat of vaporization of water means that distillation processes require a high input of energy and therefore generally operate at a higher cost compared to reverse osmosis processes.

It has been known from US Patent No. 4,725,481 that a copolyetherester elastomer can be used, on its own or as a part of a bicomponent film of a hydrophobic layer and a hydrophilic layer of copolyetherester elastomers bonded together, to permit the differential transfer of water vapor to prevent buildup of moisture such as in a surgical drape or in waterproof apparel equipment.

US 5 595 662 discloses a water purification device containing a dense hydrophilic membrane between a compartment for holding a supply of impure water and a purified water collection zone. The hydrophilic membrane used contains substantially no pores having diameters which are in the microfiltration range.

Komgold, E., Korin, E., and Ladizhensky, I; (1996) Desalination 107 121-129 discloses a desalination process via pervaporation through hydrophilic or microporous hydrophobic hollow fibres.

US 5 348 691 discloses a membrane humidifying device that is operated with normal potable quality water.

EP 521 726 discloses a water-evaporation conduit for use in humidifying equipment that is not adversely affected by contact with oils, detergents and other liquids.

### SUMMARY OF THE INVENTION

The present invention generally relates to the use of an apparatus for the controlled release of water by pervaporation, by passing water vapor contained in air, or liquid water that may contain suspended or dissolved impurities, including but not limited to seawater, brackish water or other kinds of polluted water, through one or more layers of hydrophilic membranes to remove impurities from the water.

In particular, the invention provides the use of a humidity augmenting apparatus consisting of a water source and a non-porous hydrophilic membrane, and optionally at least one opening for filling the apparatus with the water source, wherein said water source contains water and at least one of a suspended solid, a dissolved solid, a pollutant, a salt, and a biological material, wherein said non-porous hydrophilic membrane allows the water to pass through the membrane and be emitted as water vapor into an airspace of an enclosed chamber, said non-porous hydrophilic membrane preventing the at least one suspended solid, dissolved solid, pollutant, salt, and biological material from passing through the non-porous hydrophilic membrane, wherein said non-porous hydrophilic membrane comprises one or more layers of hydrophilic polymers, said hydrophilic polymer being selected from a copolyetherester elastomer, a polyether-block-polyamide, a polyether urethane, a homopolymer of polyvinyl alcohol, a copolymer of polyvinyl alcohol, and mixtures thereof, further wherein the one or more layers of hydrophilic polymers have a water vapor transmission at a thickness of 25 microns of at least 400 g/m²/24hours according to ASTM E96-95 (procedure BW), said water vapor transmission rate being measured at an air temperature of 23° C, relative humidity of 50% and an air velocity of 3 m/s, for providing moisture to an airspace of an enclosed chamber.

An alternative embodiment of the invention is disclosed in claim 2.

The layer or layers of hydrophilic membranes may be present either in the form of an unsupported structure as defined in Claim 1 or coated on or adhered to a support material as defined in Claim 2.

The hydrophilic membrane layer is made from a hydrophilic polymer having a water vapor transmission rate according to ASTM E96-95 (Procedure BW) of at least 400 g/m²/24h, measured using air at 23°C and 50% relative humidity at a velocity of 3 m/s on a film of total thickness 25 microns. A preferred hydrophilic membrane layer is made from a hydrophilic polymer having a water vapor transmission rate according to ASTM E96-95 (Procedure BW) of at least 3500 g/m²/24h, measured using air at 23°C and 50% relative humidity at a velocity of 3 m/s on a film of total thickness 25 microns.

### DETAILED DESCRIPTION

The present invention generally relates to use of an apparatus for the controlled release of water by pervaporation, by passing water vapor contained in air, or liquid water that may contain suspended or dissolved impurities, including but not limited to seawater, brackish water or other kinds of polluted water, through one or more layers of hydrophilic membrane to remove impurities from the water. The layer or layers of hydrophilic membrane may be present either in the form of an unsupported structure as defined in Claim 1 or coated on or adhered to a support material as defined in Claim 2.

Pervaporation is the process wherein a given solvent permeates into a non-porous membrane or coating, is transported across the membrane and is subsequently released from the opposite face of the membrane or coating in the form of vapor. Pervaporation is therefore different from known filtration, distillation or reverse osmosis processes in that the product is a vapor and not a liquid. If the solvent is water, non-porous hydrophilic membranes are suitable for pervaporation, because water is readily absorbed by, transported across and released from such a membrane. This water vapor can then be used for applications such as providing moisture to the air space of a growth chamber, to hydrate dry matter or to rehydrate dehydrated matter.

### Hydrophilic Membranes

"Hydrophilic membranes" means non-porous membranes that absorb water, i.e., that allow water to pass through. If there is a humidity gradient across the hydrophilic membrane, this absorbed water may diffuse through the thickness of the membrane and may be emitted from its opposite face. Hydrophilic membranes or coatings, hereinafter collectively referred to as membranes in this disclosure, feature sufficiently high water vapor transmission rates, as defined below, so that water that has passed through the membranes can be used directly in applications including but not limited to irrigating plants and rehydrating food, drinks, drugs and the like. Such membranes can comprise one or more individual layers made from materials including but not limited to the same or different hydrophilic polymers. As long as the water vapor permeation rate of the membrane in total is sufficiently high, this water can be provided at a rate consistent with its use in a given practical application as described. The non-porous nature of the membranes disclosed here serves to exclude any particulate impurities from passing through such a membrane, including microbes such as bacteria and viruses. In addition, it has been discovered that membranes made from the hydrophilic polymers described in the present invention significantly reduce or prevent the passage of dissolved salts. Therefore, the ability to use not only freshwater, but also water that may contain suspended or dissolved impurities, to produce desired amounts of purified water by pervaporation allows saline water, including but not limited to seawater or brackish water, after processing through the apparatus embodying the present invention, to be used, for the controlled release of water into an environment.

The rate at which water pervaporates through the membrane made from the hydrophilic polymer depends, among other factors, upon the moisture content on the non-water side.

The pervaporation of water through the membrane is sufficient to rehydrate dried foods, pharmaceutical products and the like, irrespective of whether the water on the opposite face of the membrane is freshwater or water that may contain suspended or dissolved impurities.

### Water Vapor Transmission Characteristics

The standard test for measuring the rate at which a given membrane transmits water is ASTM E-96-95 - Procedure BW, previously known and named as ASTM E-96-66 - Procedure BW, which is used to determine the Water Vapor Transmission Rate (WVTR) of a membrane. For this test, an assembly is used based on a water-impermeable cup, also called a "Thwing-Albert Vapometer". This cup contains water to about ¾ ± ¼ in. (19 ± 6 mm) from top. The opening of the cup is sealed watertight with a water-permeable membrane of the test material to be measured, leaving an air gap between the water surface and the membrane. In Procedure BW, the cup is then inverted, so that water is in direct contact with the membrane. The apparatus is placed in a test chamber at a controlled temperature and humidity, and air is then blown across the outside of the membrane at a specified velocity. Experiments are run in duplicate. The weights of the cup, water and membrane assemblies are measured over several days and results are averaged. The rate at which water permeates through the membrane is quoted as its "Water Vapor Transmission Rate," measured as the average weight loss of the assembly at a given membrane thickness, temperature, humidity and.air velocity, expressed as mass loss per unit membrane surface area and time. The WVTR of membranes or films according to ASTM E96-95 Method BW is typically measured on a film of thickness of 25 microns and at an air flow rate of 3 m/s, air temperature of 23°C and 50% relative humidity.

### Hydrophilic Polymers

In the context of this disclosure, the hydrophilic membranes for use with the apparatus are made from hydrophilic polymers. "Hydrophilic polymers" mean polymers which absorb water when in contact with liquid water at room temperature according to the International Standards Organization specification ISO 62 (equivalent to the American Society for Testing and Materials specification ASTM D 570).

The hydrophilic polymer is one or a blend of several polymers. The hydrophilic polymer is selected from a copolyetherester elastomer or a mixture of two or more copolyetherester elastomers as described below, such as polymers available from E.I. du Pont de Nemours and Company under the trade name Hytrel®; or a polyether-block-polyamide or a mixture of two or more polyether-block-polyamides, such as polymers available from the Elf-Atochem Company of Paris, France under the trade name of PEBAX; or homopolymers or copolymers of polyvinyl alcohol or a mixture of homopolymers or copolymers of polyvinyl alcohol. In respect of the embodiment defined in Claim 1, the hydrophilic polymer may additionally be selected from a polyether urethane or a mixture of polyether urethanes.

A particularly preferred polymer for water vapor transmission in this invention is a copolyetherester elastomer or mixture of two or more copolyetherester elastomers having a multiplicity of recurring long-chain ester units and short-chain ester units joined head-to-tail through ester linkages, where the long-chain ester units are represented by the formula: 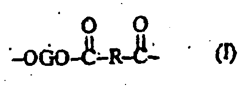 and said short-chain ester units are represented by the formula: 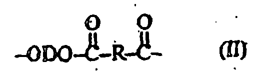 wherein:
a) G is a divalent radical remaining after the removal of terminal hydroxyl groups from a poly(alkylene oxide)glycol having a number average molecular weight of about 400-4000;
b) R is a divalent radical remaining after removal of carboxyl groups from a dicarboxylic acid having a molecular weight less than 300;
c) D is a divalent radical remaining after removal of hydroxyl groups from a diol having a molecular weight less than about 250; optionally
d) the copolyetherester contains 0-68 weight percent based on the total weight of the copolyetherester, ethylene oxide groups incorporated in the long-chain ester units of the copolyetherester; and
e) the copolyetherester contains about 25-80 weight percent short-chain ester units.

This preferred polymer is suitable for fabricating into thin but strong membranes, films and coatings. The preferred polymer, copolyetherester elastomer and methods of making it are known in the art, such as are disclosed in US Patent No. 4,725,481 for a copolyetherester elastomer with a WVTR of 3500 g/m²/24 hr, or US Patent No. 4,769,273 for a copolyetherester elastomer with a WVTR of 400-2500 g/m²/24 hr.

The polymer can be compounded with antioxidant stabilizers, ultraviolet stabilizers, hydrolysis stabilizers, dyes or pigments, fillers, anti-microbial reagents, and the like.

The use of commercially available hydrophilic polymers as membranes is possible in the context of the present invention, although it is more preferable to use copolyetherester elastomers having a WVTR of more than 400 g/m²/24h measured on a film of thickness 25 microns using air at 23°C and 50% relative humidity at a velocity of 3 m/s. Most preferred is the use of membranes made from commercially available copolyetherester elastomers having a WVTR of more than 3500 g/m²/24h, measured on a film of thickness 25 microns using air at 23°C and 50% relative humidity at a velocity of 3 m/s.

### Method For Making The Hydrophilic Polymer Membranes

The hydrophilic polymers can be manufactured into membranes of any desired thickness by a number of processes. A useful and well-established way to make membranes in the form of films is by melt extrusion of the polymer on a commercial extrusion line. Briefly, this entails heating the polymer to a temperature above the melting point, extruding it through a flat or annular die and then casting a film using a roller system or blowing a film from the melt.

Useful support materials, used in the embodiment of the invention defined in Claim 2, include woven, non-woven or bonded papers, fabrics, a layer of light blocking support material and screens permeable to water vapor, including those constructed from fibers of organic and inorganic polymers stable to moisture such as polyethylene, polypropylene, fiberglass and the like. The support material both increases strength and protects the membrane. The support material may be disposed on only one side of the hydrophilic polymer membrane or both sides. When disposed on only one side, the support material can be in contact with the source of water or away from it. Typically the support material is disposed on the outside of containers formed by the hydrophilic polymer membrane to best protect the membrane from physical damage and / or degradation by light.

### Applications of the Invention

Without being bound to any particular theory, it is believed that the purifying effect identified as the principal inventive concept of the hydrophilic membrane, realized either in the form of a coating or an unsupported membrane, when in contact with water that may contain suspended or dissolved impurities and solids, occurs because highly dipolar molecules such as water are preferentially absorbed and transported across the membrane or coating, compared to ions such as sodium and chloride. When, in addition, a humidity gradient exists across the membrane, water is released from the side not in contact with the source water, and can be absorbed by an article to be hydrated or rehydrated.

***Agricultural* / *Horticultural Applications.***

The membrane can be unsupported or coated on a support material to increase strength and durability. The apparatus typically has at least one opening for filling with water. To provide moisture for an extended period, the apparatus is conveniently in the form of a bag, pipe or tube, allowing the water to be continuously or periodically flushed to prevent the built up of salts or other pollutants. Water vapor preferentially passes through the membranes, leaving behind dissolved salts and other materials as well as suspended particulates such as inorganic or organic matter, including microbes like bacteria, viruses and the like.

Agriculturally related embodiments of this invention include providing moisture for growing plants, germinating seeds while excluding not only injurious salts but also pathogens such as fungi, bacteria and viruses harmful to the seeds and plants. For seed germination, the seeds can be encased in the hydrophilic membrane, such as in a sealed container, and the container placed in contact with water or a moistened medium. This allows the seeds to germinate in a sterile environment, preventing seed losses due to attacks by pathogens.

***Humidification* / *Horticultural Applications.*** Besides providing moisture to the seeds, or plants, the apparatus can also be used to maintain or raise the humidity of enclosed chambers. An example is in agricultural applications to provide moisture to the air surrounding the plants in growth chambers.

When the plants are grown in an enclosed growth chamber, such as a greenhouse, the increase in humidity can have a significant and beneficial effect. Moreover, the membranes can be partially or completely exposed to the air space, to raise humidity by the process of pervaporation. The membranes of the water delivery apparatus can be partially or completely in contact with the airspace. To protect the hydrophilic polymer from degradation, the membrane can be covered by a layer of support material to block light or preferably the apparatus is placed under shade or in a darkened enclosure.

As in agricultural applications, the apparatus typically has at least one opening for filling with water, and to provide moisture for an extended period, the apparatus is conveniently in the form of a bag, pipe or tube, allowing the water to be continuously or periodically flushed to prevent the built up of salts or other pollutants.

***Hydration or Rehydration.*** The method of pervaporation through the membrane can be used to hydrate or rehydrate materials such as food or pharmaceutical or agricultural compositions. The dry or dehydrated materials can be carried in sealed pouches comprising the hydrophilic membrane of the invention, and then hydrated or rehydrated using water vapor contained in air, or liquid water that may contain suspended or dissolved impurities, including but not limited to seawater, brackish water or other kinds of polluted water.

In summary, pervaporation though the water purification apparatus of the present invention thus can be used to to humidify the air spaces of growth chambers such as greenhouses, and to hydrate or rehydrate dried foods, pharmaceuticals and the like.

The present invention can be operated at a lower cost and with less equipment infrastructure, compared to the prior art systems. Because the apparatus for providing moisture to the air space of an enclosed chamber emits water in the form of water vapor instead of liquid water, the pressure of impure water supplied to the membrane layer of the apparatus can be much less than the 2500 kPa typically required for purification of seawater using reverse osmosis. The pressure is even less than the lower pressures required for reverse osmosis of less saline brines. Generally, the applied pressure differential over ambient atmospheric pressure is less than about 1000 kPa. Although high pressures may increase the rate at which the membrane layer emits water vapor, excessive pressure can shift the self-regulating equilibrium to cause the growing medium to become too wet. Furthermore, high pressures require thick membranes or preferably strong supporting materials to contain the pressure.

Therefore, the applied pressure is typically less than about 250 kPa, and very often less than about 100 kPa. Most often the applied pressure is little or no more than that provided by the weight of the water itself, or the pressure needed to flush impure water through the water purification apparatus, as this allows the use of thin hydrophilic membranes or films of the hydrophilic polymer.

### Examples

In the examples that follow, Copolyetherester A is a polymer made according to the method disclosed in US Patent No. 4,725,481 starting from 30 parts of dimethyl terephthalate, 57 parts of a poly(alkylene)glycol the alkylene content of which comprises of 65% ethylene and 35% propylene, 9 parts of dimethyl isophthalate, 16 parts of butanediol (stoichiometric amount) and 0.7 parts of trimethyl trimellitate. Copolyetherester A contains about 37% by weight of poly(ethylene oxide)glycol, and the membranes made from Copolyetherester A feature a water swell of around 54% by weight at room temperature and a WVTR of at least 10,000 g/m²/24h, measured on a film of thickness 25 microns using air at 23°C and 50% relative humidity at a velocity of 3 m/s.

Copolyetherester B is a polymer made according to the method disclosed in US Patent No. 4,725,481 starting from 44 parts of dimethyl terephthalate, 51 parts of a poly(alkylene)glycol the alkylene content of which comprises of 65% ethylene and 35% propylene, 19 parts of butanediol (stoichiometric amount) and 0.4 parts of trimethyl trimellitate. Copolyetherester B contains about 33% by weight of poly(ethylene oxide) glycol, and the membranes made from Copolyetherester B feature a water swell of around 30% by weight at room temperature and a WVTR of at least 10,000 g/m²/24h, measured on a film of thickness 25 microns using air at 23°C and 50% relative humidity at a velocity of 3 m/s.

Copolyetherester C is a polymer made according to the method disclosed in US Patent No. 4,725,481 starting from 50 parts of dimethyl terephthalate, 44 parts of a poly(alkylene)glycol the alkylene content of which comprises of 85% propylene and 15% ethylene, 21 parts of butanediol (stoichiometric amount) and 0.3 parts of trimethyl trimellitate. The membranes made from Copolyetherester C feature a water swell of around 5% by weight at room temperature and a WVTR of 2,200 g/m²/24h, measured on a film of thickness 25 microns using air at 23°C and 50% relative humidity at a velocity of 3 m/s.

### EXAMPLES 1 - 10

The first set of examples, Examples 1-10, are provided for illustrative purposes only. These Examples do not fall within the scope of the invention. These Examples demonstrate that water vapor passes through the hydrophilic membranes of the water purification apparatus, and that the hydrophilic membranes let water pass through them but reject the passage of salt ions. In the examples, five hydrophilic membrane bags made from an extruded film of the hydrophilic polymer Copolyetherester A were filled with seawater, and five hydrophilic membrane bags were made from an extruded film of another hydrophilic polymer Copolyetherester B were filled with tap water. A heat sealer was used to seal the hydrophilic membrane bags closed. The bags had a maximum effective surface area calculated as 0.1 m².

The bags were placed in a room at ambient temperature and uncontrolled humidity. Samples 2, 3, 5, 7, 8 and 9 were placed directly on the metal tray. Samples 1 and 10 were laid on tissue paper on the tray and samples 4 and 6 were placed on nylon mesh to indicate possible effects of air flow or 'wicking', which would affect the rate at which water vapor was removed from the surface. As soon as the bags were filled, the surface of the bags became damp to the touch. The bags were completely sealed and the upper surface of each bag was exposed to air.

The bags were weighed and visually inspected every day over a period of one week, and the measured weight decreased daily until at between five and seven days all the bags were empty of water. In this first case, as the test was an empirical indicator, it was difficult to take into account all the factors such as original mass of water, type of water, surface area, water contact area and thickness of film. However, taking all these considerations into account, there was no apparent difference in the rate of 'water loss' for a similar surface area.

The now empty bags which had originally contained seawater were found to have a white salty deposit inside, visible as large crystals. The bag in Example 5, for instance, contained in excess of 20 g of solids. Under ambient pressure and temperature, in excess of 2 liters of water per square meter per day pervaporated through the bags. Other measurements suggested that Copolyetherester A was capable of passing more than one liter of water per square meter per hour, given a sufficiently fast flow of air across the surface of the hydrophilic membrane to remove the water vapor as it was emitted from the bag by pervaporation. It is believed that natural evaporation rate of the water was the limiting factor in the flow of water through the bag. Hydrophilic membrane bag samples 1 and 10, which were placed on paper tissue, and hydrophilic membrane bag samples 4 and 6, which were placed on nylon mesh, did not release water any faster than hydrophilic membrane bags that had been placed directly on a metal tray. There was also no noticeable difference between the thicker and thinner films of polymer.

The results of the examples are summarized in Table 1 below.

**TABLE 1**

| Pervaporation of Water through Sealed Hydrophilic Membrane Bags | | | | |
|---|---|---|---|---|
| Example | Polymer type | Membrane thickness (microns) | Water source | Starting mass (g) |
| 1 | Copolyetherester B | 100 | Sea | 493 |
| 2 | Copolyetherester B | 100 | Sea | 418 |
| 3 | Copolyetherester B | 100 | Tap | 488 |
| 4 | Copolyetherester A | 100 | Sea | 509 |
| 5 | Copolyetherester A | 100 | Sea | 551 |
| 6 | Copolyetherester A | 100 | Tap | 441 |
| 7 | Copolyetherester A | 50 | Sea | 260 |
| 8 | Copolyetherester A | 50 | Tap | 515 |
| 9 | Copolyetherester B | 50 | Tap | 338 |
| 10 | Copolyetherester B | 50 | Tap | 380 |

### EXAMPLE II

Example II demonstrates the humidification application of the present invention.

In Example 11, using a conventional heat-sealing device, a soybean seed was sealed between two layers of hydrophilic membrane of thickness 50 microns made from Copolyetherester B, giving an airtight square translucent pouch of dimensions 2x2 cm, with air trapped around the seed. The hydrophilic membrane pouch was then floated on tap water in a beaker and left in the dark at room temperature. After two weeks, the soybean was observed to have germinated within the pouch, from water that had pervaporated into the pouch through the hydrophilic membrane.

### EXAMPLE 12

Example 12 demonstrates a rehydration application. In this Example, dehydrated solids were rehydrated. Two samples each of dried baby milk, sugar (sucrose) or table salt (sodium chloride) were placed in separately sealed hydrophilic membrane pouches made from Copolyetherester A. The pouches were placed under water, one sample each under fresh water and one sample each under seawater. The contents were observed to rehydrate rapidly. The speed of rehydration varied, depending upon the different amounts of hygroscopicity of the powders. The specific benefit of providing dehydrated solids in pouches from the inventive hydrophilic membranes is that the user need not carry potable water, since the food can be rehydrated from impure water sources.

It will be appreciated by the skilled addressee that the term purification is somewhat dependent upon the use to which the purified water is to be put. For example, water to be used for growing plants may be less pure than that required for human consumption. Of course, it will be appreciated that the purification process can be repeated in successive stages to enhance purity, i.e., allowing the pollutant water to pass through one or more thicker layer of hydrophilic membranes (or even through an additional filtration system). Furthermore, purity may refer to different components depending upon the context of use. For example, in water for growing plants generally only the salt content will be relevant, whereas in water for human consumption, the active microbial content will be most relevant, and in water for (re-)hydrating drugs for intravenous injection, the total biological load and the salt content will be highly relevant. Thus, purification should be understood to refer to the process of preparing water of sufficient quality for its intended use. Generally, within the context of the invention, purified water released from the membrane will contain about less 1% (preferably less than 0.1% and lower) dissolved or suspended solids and particulate matters. In relation to dissolved salts, these are generally retained in and on the membrane, with purified vapor released from the membrane having a purity of less than about 1% (and typically lower) in relation to dissolved solids.

## Claims

1. Use of a humidity augmenting apparatus consisting of a water source, a non-porous hydrophilic membrane, and optionally at least one opening for filling the apparatus with the water source,
wherein said water source contains water and at least one of a suspended solid, a dissolved solid, a pollutant, a salt, and a biological material,
wherein said non-porous hydrophilic membrane allows the water to pass through the membrane and be emitted as water vapor into an airspace of an enclosed chamber, said non-porous hydrophilic membrane preventing the at least one suspended solid, dissolved solid, pollutant, salt, and biological material from passing through the non-porous hydrophilic membrane,
wherein said non-porous hydrophilic membrane comprises one or more layers of hydrophilic polymers, said hydrophilic polymer being selected from a copolyetherester elastomer, a polyether-block-polyamide, a polyether urethane, a homopolymer of polyvinyl alcohol, a copolymer of polyvinyl alcohol, and mixtures thereof,
further wherein the one or more layers of hydrophilic polymers have a water vapor transmission at a thickness of 25 microns of at least 400 g/m²/24hours according to ASTM E96-95 (procedure BW), said water vapor transmission rate being measured at an air temperature of 23° C, relative humidity of 50% and an air velocity of 3 m/s, for providing moisture to an airspace of an enclosed chamber.

2. Use of a humidity augmenting apparatus consisting of a water source, a non-porous hydrophilic membrane, optionally at least one opening for filling the apparatus with the water source, and optionally a support material, wherein the non-porous hydrophilic membrane is coated or adhered onto the support material,
wherein said water source contains water and at least one of a suspended solid, a dissolved solid, a pollutant, a salt, and a biological material,
wherein said non-porous hydrophilic membrane allows the water to pass through the membrane and be emitted as water vapor into an airspace of an enclosed chamber, said non-porous hydrophilic membrane preventing the at least one suspended solid, dissolved solid, pollutant, salt, and biological material from passing through the non-porous hydrophilic membrane,
wherein said non-porous hydrophilic membrane comprises one or more layers of hydrophilic polymers, said hydrophilic polymer being selected from a copolyetherester elastomer, a polyether-block-polyamide, a homopolymer of polyvinyl alcohol, a copolymer of polyvinyl alcohol, and mixtures thereof,
further wherein the one or more layers of hydrophilic polymers have a water vapor transmission at a thickness of 25 microns of at least 400 g/m²/24hours according to ASTM E96-95 (procedure BW), said water vapor transmission rate being measured at an air temperature of 23° C, relative humidity of 50% and an air velocity of 3 m/s, for providing moisture to an airspace of an enclosed chamber.

3. The use according to claim 1 or claim 2, wherein the hydrophilic polymer is a copolyetherester elastomer, or a mixture of two or more said copolyetherester elastomers, wherein said copolyetherester elastomer comprises a multiplicity of recurring long-chain ester units and a multiplicity of recurring short chain ester units, said long-chain ester units and short-chain ester units being joined head-to-tail by ester linkages, wherein the long-chain ester units have the general formula 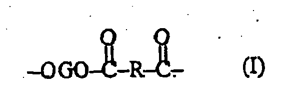 wherein:
a) G is a divalent radical remaining after terminal hydroxyl groups are removed from a poly(alkylene oxide)glycol having a number average molecular weight of about 400-4000;
b) R is a divalent radical remaining after carboxyl groups are removed from a dicarboxylic acid having a molecular weight less than 300;
wherein the short-chain ester units have the general formula 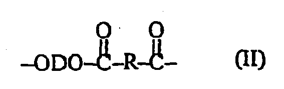 wherein:
a) D is a divalent radical remaining after hydroxyl groups are removed from a diol having a molecular weight less than about 250;
b) R is a divalent radical remaining after carboxyl groups are removed from a dicarboxylic acid having a molecular weight less than 300;
wherein the copolyetherester optionally contains from 0 to 68 wt.% ethylene oxide groups based on the total weight of the copolyetherester, said ethylene oxide groups being contained in the long-chain ester units; and
wherein the copolyetherester contains from about 25 to 80 wt.% of said short-chain ester units.

4. The use according to claim 3, wherein the copolyetherester elastomer having a film thickness of 25 microns has a water vapor transmission rate according to ASTM E96-95 (procedure BW) of at least 3500 g/m²/24hours, said water vapor transmission rate being measured at an air temperature of 23° C, relative humidity of 50% and an air velocity of 3 m/s.

5. The use according to claim 1 or claim 2, wherein the enclosed chamber is a growth chamber.

6. The use according to claim 5, wherein the growth chamber is a greenhouse.

7. The use according to claim 1 or claim 2, wherein only part of the non-porous hydrophilic membrane is in contact with the airspace.

8. The use according to claim 1 or claim 2, wherein the non-porous hydrophilic membrane is completely in contact with the airspace.

9. The use according to claim 2, wherein the support material is selected from woven paper, non-woven paper, bonded paper, fabric permeable to water vapor, a layer of light blocking support material and a screen permeable to water vapor.

10. The use according to claim 1 or claim 2, wherein said apparatus is selected from a bag, a pipe, or a tube.

## Patentansprüche

1. Verwendung einer Vorrichtung zur Erhöhung der Feuchtigkeit, bestehend aus einer Wasserquelle, einer nicht-porösen hydrophilen Membran und gegebenenfalls mindestens einer Öffnung zum Befüllen der Vorrichtung mit der Wasserquelle,
wobei die Wasserquelle Wasser und mindestens eine Substanz von einem suspendierten Feststoff, einem gelösten Feststoff, einem Schadstoff, einem Salz und einem biologischen Material enthält,
wobei die nicht-poröse hydrophile Membran Wasser hindurchlässt und dieses als Wasserdampf in einen Luftraum einer geschlossenen Kammer entsendet, wobei die nicht-poröse hydrophile Membran die mindestens eine Substanz von dem suspendierten Feststoff, gelösten Feststoff, Schadstoff, Salz und biologischen Material nicht hindurchlässt,
wobei die nicht-poröse hydrophile Membran eine oder mehrere Schichten hydrophiler Polymere umfasst, wobei das hydrophile Polymer ausgewählt ist aus einem Copolyetheresterelastomer, einem Polyetherblockpolyamid, einem Polyetherurethan, einem Homopolymer von Polyvinylalkohol, einem Copolymer von Polyvinylalkohol und deren Gemischen,
wobei weiterhin die eine oder mehreren Schichten der hydrophilen Polymere bei einer Dicke von 25 Mikron eine Wasserdampfübertragung gemäß ASTM E96-95 (Verfahren BW) von mindestens 400 g/m²/24 Std. hat/haben, wobei die Wasserdampfübertragungsgeschwindigkeit bei einer Lufttemperatur von 23°C, einer relativen Feuchtigkeit von 50% und einer Luftgeschwindigkeit von 3 m/s gemessen wird,
zur Versorgung eines Luftraums einer geschlossenen Kammer mit Feuchtigkeit.

2. Verwendung einer Vorrichtung zur Erhöhung der Feuchtigkeit, bestehend aus einer Wasserquelle, einer nicht-porösen hydrophilen Membran, gegebenenfalls mindestens einer Öffnung zum Befüllen der Vorrichtung mit der Wasserquelle und gegebenenfalls einem Trägermaterial, wobei die nicht-poröse hydrophile Membran auf das Trägermaterial aufgeschichtet oder daran befestigt ist,
wobei die Wasserquelle Wasser und mindestens eine Substanz von einem suspendierten Feststoff, einem gelösten Feststoff, einem Schadstoff, einem Salz und einem biologischen Material enthält,
wobei die nicht-poröse hydrophile Membran Wasser hindurchlässt und dieses als Wasserdampf in einen Luftraum einer geschlossenen Kammer entsendet, wobei die nicht-poröse hydrophile Membran die mindestens eine Substanz von dem suspendierten Feststoff, gelösten Feststoff, Schadstoff, Salz und biologischen Material nicht hindurchlässt,
wobei die nicht-poröse hydrophile Membran eine oder mehrere Schichten hydrophiler Polymere umfasst, wobei das hydrophile Polymer ausgewählt ist aus einem Copolyetheresterelastomer, einem Polyetherblockpolyamid, einem Homopolymer von Polyvinylalkohol, einem Copolymer von Polyvinylalkohol und deren Gemischen,
wobei weiterhin die eine oder mehreren Schichten der hydrophilen Polymere bei einer Dicke von 25 Mikron eine Wasserdampfübertragung gemäß ASTM E96-95 (Verfahren BW) von mindestens 400 g/m²/24 Std. hat/haben, wobei die Wasserdampfübertragungsgeschwindigkeit bei einer Lufttemperatur von 23°C, einer relativen Feuchtigkeit von 50% und einer Luftgeschwindigkeit von 3 m/s gemessen wird,
zur Versorgung eines Luftraums einer geschlossenen Kammer mit Feuchtigkeit.

3. Verwendung nach Anspruch 1 oder Anspruch 2, wobei das hydrophile Polymer ein Copolyetheresterelastomer oder ein Gemisch von zwei oder mehreren Copolyetheresterelastomeren ist, wobei das Copolyetheresterelastomer eine Vielzahl von wiederholten langkettigen Estereinheiten und eine Vielzahl von wiederholten kurzkettigen Estereinheiten umfasst, wobei die langkettigen Estereinheiten und die kurzkettigen Estereinheiten über Esterbindungen mit dem Kopf an den Schwanz verbunden sind,
wobei die langkettigen Estereinheiten die allgemeine Formel 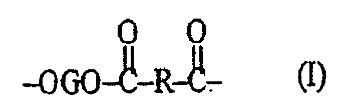 haben, wobei:
a) G ein zweiwertiger Rest ist, der nach dem Entfernen der endständigen Hydroxylgruppen von einem Poly(alkylenoxid)glycol mit einem Molekulargewichtszahlenmittel von etwa 400 bis 4000 übrig bleibt;
b) R ein zweiwertiger Rest ist, der nach dem Entfernen der Carboxylgruppen von einer Dicarbonsäure mit einem Molekulargewicht von weniger als 300 übrig bleibt;
wobei die kurzkettigen Estereinheiten die allgemeine Formel: 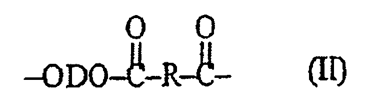 haben, wobei:
a) D ein zweiwertiger Rest ist, der nach dem Entfernen der Hydroxylgruppen von einem Diol mit einem Molekulargewicht von weniger als etwa 250 übrig bleibt;
b) R ein zweiwertiger Rest ist, der nach dem Entfernen der Carboxylgruppen von einer Dicarbonsäure mit einem Molekulargewicht von weniger als 300 übrig bleibt;
wobei:
der Copolyetherester gegebenenfalls 0 bis 68 Gew.-% Ethylenoxidgruppen, bezogen auf das Gesamtgewicht des Copolyetheresters, enthält, wobei die Ethylenoxidgruppen in den langkettigen Estereinheiten enthalten sind; und
der Copolyetherester etwa 25 bis 80 Gew.-% kurzkettige Estereinheiten enthält.

4. Verwendung nach Anspruch 3, wobei das Copolyetheresterelastomer mit einer Filmdicke von 25 Mikron eine Wasserdampfübertragungsgeschwindigkeit gemäß ASTM E96-95 (Verfahren BW) von mindestens 3500 g/m²/24 Std. hat, wobei die Wasserdampfübertragungsgeschwindigkeit bei einer Lufttemperatur von 23°C, einer relativen Feuchtigkeit von 50% und einer Luftgeschwindigkeit von 3 m/s gemessen wird.

5. Verwendung nach Anspruch 1 oder Anspruch 2, wobei die geschlossene Kammer eine Anzuchtkammer ist.

6. Verwendung nach Anspruch 5, wobei die Anzuchtkammer ein Gewächshaus ist.

7. Verwendung nach Anspruch 1 oder Anspruch 2, wobei nur ein Teil der nicht-porösen hydrophilen Membran in Kontakt mit dem Luftraum steht.

8. Verwendung nach Anspruch 1 oder Anspruch 2, wobei die nicht-poröse hydrophile Membran vollständig in Kontakt mit dem Luftraum steht.

9. Verwendung nach Anspruch 2, wobei das Trägermaterial aus Velinpapier, Papiervlies, Papierverbundstoff, wasserdampfdurchlässigem Gewebe, einer Schicht aus einem lichtsperrenden Trägermaterial und einem wasserdampfdurchlässigen Schirm ausgewählt ist.

10. Verwendung nach Anspruch 1 oder Anspruch 2, wobei die Vorrichtung ausgewählt ist aus einem Beutel, einem Rohr oder einem Schlauch.

## Revendications

1. Utilisation d'un appareillage d'augmentation de l'humidité, constitué d'une source d'eau, d'une membrane hydrophile non poreuse, et en option d'au moins une ouverture pour remplir l'appareillage à l'aide de la source d'eau,
dans laquelle ladite source d'eau contient de l'eau et au moins l'un des éléments pris parmi une substance solide en suspension, une substance solide dissoute, un polluant, un sel, et un matériau biologique,
dans laquelle ladite membrane hydrophile non poreuse permet à l'eau de passer à travers la membrane et d'être émise en tant que vapeur d'eau dans l'espace d'air d'une chambre enclose, ladite membrane hydrophile non poreuse empêchant la ou l'au moins une substance solide en suspension, une substance solide dissoute, un polluant, un sel, et un matériau biologique, de passer à travers la membrane hydrophile non poreuse,
dans laquelle ladite membrane hydrophile non poreuse comprend une ou plusieurs couches de polymères hydrophiles, ledit polymère hydrophile étant sélectionné parmi un élastomère de copolyétherester, un polyamide-bloc-polyéther, un uréthanne de polyéther, un homopolymère d'alcool polyvinylique, un copolymère d'alcool polyvinylique et des mélanges de ces derniers,
en outre, dans laquelle la ou les couches de polymères hydrophiles a ou ont une transmission de vapeur d'eau à une épaisseur de 25 microns d'au moins 400 g/m²/24 heures, conformément à la norme ASTM E96-95 (procédure BW), ladite vitesse de transmission de vapeur d'eau étant mesurée à une température de l'air de 23°C, à une humidité relative de 50% et à une vitesse de l'air de 3 m/s, en vue de la fourniture d'humidité à un espace d'air d'une chambre enclose.

2. Utilisation d'un appareillage d'augmentation de l'humidité, constitué d'une source d'eau, d'une membrane hydrophile non poreuse, en option d'au moins une ouverture pour remplir l'appareillage à l'aide de la source d'eau, et en option, un matériau de support, dans laquelle la membrane hydrophile non poreuse est appliquée par revêtement ou par effet d'adhésion au matériau de support,
dans laquelle ladite source d'eau contient de l'eau et au moins l'un des éléments pris parmi une substance solide en suspension, une substance solide dissoute, un polluant, un sel, et un matériau biologique,
dans laquelle ladite membrane hydrophile non poreuse permet à l'eau de passer à travers la membrane et d'être émise en tant que vapeur d'eau dans l'espace d'air d'une chambre enclose, ladite membrane hydrophile non poreuse empêchant la ou l'au moins une substance solide en suspension, une substance solide dissoute, un polluant, un sel, et un matériau biologique, de passer à travers la membrane hydrophile non poreuse,
dans laquelle ladite membrane hydrophile non poreuse comprend une ou plusieurs couches de polymères hydrophiles, ledit polymère hydrophile étant sélectionné parmi un élastomère de copolyétherester, un polyamide-bloc-polyéther, un homopolymère d'alcool polyvinylique, un copolymère d'alcool polyvinylique et des mélanges de ces derniers,
en outre, dans laquelle la ou les couches de polymères hydrophiles a ou ont une transmission de vapeur d'eau à une épaisseur de 25 microns d'au moins 400 g/m²/24 heures, conformément à la norme ASTM E96-95 (procédure BW), ladite vitesse de transmission de vapeur d'eau étant mesurée à une température de l'air de 23°C, à une humidité relative de 50% et à une vitesse de l'air de 3 m/s, en vue de la fourniture d'humidité à un espace d'air d'une chambre enclose.

3. Utilisation selon la revendication 1 ou la revendication 2, dans laquelle le polymère hydrophile est un élastomère de copolyétherester ou un mélange de deux ou plusieurs desdits élastomères de copolyétherester, dans laquelle ledit élastomère de copolyétherester comprend une multiplicité d'unités d'ester récurrentes à longue chaîne et une multiplicité d'unités d'ester récurrentes à courte chaîne, lesdites unités d'ester à longue chaîne et lesdites unités d'ester à courte chaîne étant jointes en tête-à-queue par des liaisons ester, dans laquelle les unités d'ester à longue chaîne ont la formule générale 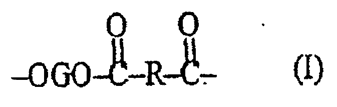 dans laquelle:
a) G est un radical divalent restant après l'élimination des groupements hydroxyle terminaux d'un poly(oxyde d'alcylène)glycol, ayant un poids moléculaire moyen au nombre d'environ 400-4000;
b) R est un radical divalent restant après l'élimination des groupements carboxyles d'un acide dicarboxylique ayant un poids moléculaire inférieur à 300;
dans lequel les unités d'ester à courte chaîne ont la formule générale 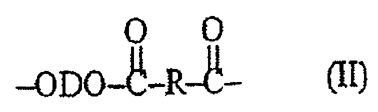 dans laquelle:
a) D est un radical divalent restant après l'élimination des groupements hydroxyles d'un diol ayant un poids moléculaire inférieur à environ 250;
b) R est un radical divalent restant après l'élimination des groupements carboxyles d'un acide dicarboxylique ayant un poids moléculaire inférieur à 300;
dans lequel le copolyétherester contient en option de 0 à 68% en poids de groupements d'oxyde d'éthylène, sur la base du poids total du copolyétherester, lesdits groupements d'oxyde d'éthylène étant contenus dans les unités d'ester à longue chaîne; et
dans lequel le copolyétherester contient environ de 25 à 80% en poids desdites unités d'ester à courte chaîne.

4. Utilisation selon la revendication 3, dans laquelle l'élastomère de copolyétherester, ayant une épaisseur de film de 25 microns, a une vitesse de transmission de vapeur d'eau, conformément à la norme ASTM E96-95 (procédure BW), d'au moins 3500 g/m²/24 heures, ladite vitesse de transmission de vapeur d'eau étant mesurée à une température de l'air de 23°C, à une humidité relative de 50% et à une vitesse de l'air de 3 m/s.

5. Utilisation selon la revendication 1 ou la revendication 2, dans laquelle la chambre enclose est une chambre de croissance.

6. Utilisation selon la revendication 5, dans laquelle la chambre de croissance est une serre.

7. Utilisation selon la revendication 1 ou la revendication 2, dans laquelle une partie seulement de la membrane hydrophile non poreuse est en contact avec l'espace d'air.

8. Utilisation selon la revendication 1 ou la revendication 2, dans laquelle la membrane hydrophile non poreuse est complètement en contact avec l'espace d'air.

9. Utilisation selon la revendication 2, dans laquelle le matériau de support est sélectionné parmi le papier tissé, le papier non tissé, le papier collé, une étoffe perméable à la vapeur d'eau, une couche de matériau de support bloquant la lumière et un écran perméable à la vapeur d'eau.

10. Utilisation selon la revendication 1 ou la revendication 2, dans laquelle ledit appareillage est sélectionné parmi un sac, un tuyau ou un tube.
